# EUROPÄISCHE PATENTANMELDUNG

(11) **EP 2 375 205 A2**
(43) Veröffentlichungstag der Anmeldung: **12.10.2011**
(21) Anmeldenummer: 11002822.2
(22) Anmeldetag: 05.04.2011
(51) Int. Cl.: F26B 25/06

(54) **Transportgestell zum Fördern eines Gegenstandes durch eine Trocknungsanlage, Verfahren zum Trocknen einer Beschichtung auf einem Gegenstand und Verwendung eines Transportgestells hierzu**

(30) Priorität: 10.04.2010 DE 102010014489
(71) Anmelder: Eisenmann AG, 71032 Böblingen (DE)
(72) Erfinder: Hanf, Jürgen, 72070 Tübingen (DE)
(74) Vertreter: Heinrich, Hanjo

(57) **Zusammenfassung**

An einem Transportgestell (10;10';1010;1010') zum Fördern von Gegenständen durch eine Trocknungsanlage ist wenigstens ein Gegenstand, insbesondere eine Fahrzeugkarosserie (12;1076) oder ein Karosserieteil, welcher wenigstens eine von außen zugängliche Hohlraumöffnung aufweist, die zu wenigstens einem Hohlraum des Gegenstandes führt, befestigbar. Das Transportgestell (10;10';1010;1010') umfasst eine Befestigungseinrichtung (30), durch welche der Gegenstand (12; 1076) an dem Transportgestell (10; 10'; 1010; 1010') befestigbar ist. Das Transportgestell (10; 10'; 1010; 1010') umfasst außerdem eine Dichteinrichtung (34; 1078), durch welche die wenigstens eine Hohlraumöffnung des Gegenstandes (12; 1076) zumindest vorübergehend gegen umgebene Atmosphäre weitgehend gasdicht verschließbar ist.
Außerdem sind ein Verfahren zum Trocknen einer Beschichtung auf einem Gegenstand (12;1076) und die Verwendung eines Traggestells hierzu angegeben.

## Beschreibung

Die Erfindung betrifft ein Transportgestell zum Fördern von Gegenständen durch eine Trocknungsanlage, an welchem wenigstens ein Gegenstand, insbesondere eine Fahrzeugkarosserie oder ein Karosserieteil, welcher wenigstens eine von außen zugängliche Hohlraumöffnung aufweist, die zu wenigstens einem Hohlraum des Gegenstandes führt, befestigbar ist, wobei das Transportgestell eine Befestigungseinrichtung umfasst, durch welche der Gegenstand an dem Transportgestell befestigbar ist.

Außerdem betrifft die Erfindung ein Verfahren zum Trocknen einer Beschichtung auf einem Gegenstand, insbesondere auf einer Fahrzeugkarosserie oder auf einem Karosserieteil, welcher wenigstens eine von außen zugängliche Hohlraumöffnung aufweist, die zu einem Hohlraum führt, bei welchem
a) der Gegenstand auf einem Transportgestell in einen mit einem Inertgas gefüllten Trockenraum hinein und wieder heraus gefördert wird;
b) die Beschichtung im Trockenraum durch Trockenmittel getrocknet wird.

Ferner betrifft die Erfindung die Verwendung eines Transportgestells zum Fördern wenigstens eines Gegenstandes, insbesondere einer Fahrzeugkarosserie oder eines Karosserieteils, welcher wenigstens eine von außen zugängliche Hohlraumöffnung aufweist, die zu wenigstens einem Hohlraum des Gegenstandes führt, durch eine Trocknungsanlage.

Unter dem Begriff Trocknen ist vorliegend jede Art der Vernetzung, des Polymerisierens und des Aushärtens von Material zu verstehen, insbesondere das Aushärten eines Lackes durch Strahlung.

In jüngerer Zeit haben sich vermehrt unter UV-Bestrahlung härtende Lacke etabliert, die in einer Inertgasatmosphäre durch Bestrahlung mit UV-Licht ausgehärtet werden müssen, da es in einer sauerstoffhaltigen Normalatmosphäre zu unerwünschten Reaktionen, insbesondere mit Sauerstoff, käme, durch welche die Qualität der gehärteten Lackierung vermindert würde. Mit derartigen Lacken beschichtete Fahrzeugkarosserien oder Karosserieteile, wozu insbesondere Stoßfänger, Hauben und Türen zählen, werden beispielsweise in Trocknungsanlagen ausgehärtet, wie sie aus der DE 10 2008 014 378 A1 bekannt sind.

Die zu trocknenden Gegenstände werden auf einem Traggestell, einem so genannten Skid, in einen mit Inertgas gefüllten Trockenraum hinein bewegt und dort mit UV-Strahlung beaufschlagt.

Die Inertgasatmosphäre sollte dabei höchstens eine Restsauerstoffmenge von 10% haben. Üblicherweise ist jedoch eine Inertgasatmosphäre erforderlich, welche eine Restsauerstoffmenge von etwa 1% bis 5%, vorzugsweise von etwa 1%, aufweist. Die Sauerstoffkonzentration in dem Trockenraum wird mittels Sensoren überwacht und die Zufuhr von Inertgas abhängig von der vorliegenden Sauerstoffkonzentration geregelt.

Eine geringe Restsauerstoffmenge erlaubt größere Toleranzbereiche im Hinblick auf die einzuhaltenden Belichtungsparameter wie die spezifische Strahlungsleistung mW cm⁻² und die spezifische Strahlungsenergie mJ cm⁻², um eine qualitativ hochwertige Lackierung zu erhalten.

In Fahrzeugkarosserien und in Karosserieteilen sind stets bauartbedingte Hohlräume vorhanden, welche von außen über Hohlraumöffnungen zugänglich sind. Die zu den Hohlräumen führenden Hohlraumöffnungen werden beispielsweise genutzt, um im Rahmen der Hohlraumversiegelung der Bauteile Wachs in die Hohlräume einzuspritzen. Es können auch mehrere Hohlraumöffnungen zu einem einzelnen Hohlraum führen. Bei Fahrzeugkarosserien weisen die meisten Hohlraumöffnungen nach unten und finden sich an dem Bodenblech der Fahrzeugkarosserie.

Wenn nun eine frisch lackierte Fahrzeugkarosserie oder ein frisch lackiertes Karosserieteil in den mit Inertgas gefüllten Trockenraum bewegt wird, um den aufgebrachten UV-Lack auszuhärten, befindet sich in den Hohlräumen eine sauerstoffhaltige Atmosphäre, in der Regel Normalatmosphäre. Wenn diese Atmosphäre beim Eintauchen der Fahrzeugkarosserie oder des Karosserieteils in den Trockenraum eindringt, kann die Sauerstoffkonzentration im Trockenraum größer als die Konzentration von etwa 1% Restsauerstoff werden, die für eine einwandfreie Aushärtung des UV-Lacks erforderlich ist.

Eine solche Verunreinigung der Inertgasatmosphäre im Trockenraum erfolgt besonders dann, wenn das Intergas schwerer als Luft ist und die Fahrzeugkarosserie oder das Karosserieteil von oben in den Trockenraum hinein bewegt wird. Wenn beispielsweise Kohlendioxid als Inertgas verwendet wird, wird die sauerstoffhaltige Atmosphäre durch das Kohlendioxid nach oben aus dem Hohlraum der Fahrzeugkarosserie oder des Karosserieteils heraus gedrückt, da die Hohlräume über die Hohlraumöffnungen und über kleine Durchgänge und Ritzen im Durchgang von Gas durchströmt werden können. Der Weg zwischen einer Hohlraumöffnung und vorhandenen kleinen Durchgängen und Ritzen bildet dabei jeweils einen Hauptströmungsweg, durch den sehr schnell verhältnismäßig viel Atmosphäre aus dem Hohlraum abströmen kann.

Wenn beispielsweise Fahrzeugkarosserien in einer KopfüberStellung in dem Trockenraum belichtet werden, weisen die meisten Hohlraumöffnungen der Fahrzeugkarosserie nach oben, so dass Kohlendioxid von unten durch die angesprochenen Durchgänge und Ritzen in den Hohlraum eindringen und die sauerstoffhaltige Atmosphäre über Hohlräumöffnungen aus den Hohlräumen nach oben ausströmen kann.

In jedem Fall muss zunächst der Sauerstoffgehalt der Inertgasatmosphäre auf den benötigten Wert eingestellt werden, wozu üblicherweise so lange zusätzliches Inertgas in den Trockenraum gefördert wird, bis dieses den Sauerstoff nach oben aus dem Trockenraum verdängt hat. Die Sauerstoffkonzentration in dem Trockenraum kann dabei, wie oben erwähnt, in an und für sich bekannter Weise mittels Sensoren überwacht werden.

Es ist Aufgabe der Erfindung, ein Traggestell, ein Verfahren und eine Verwendung der eingangs genannten Art anzugeben, durch welche beim Trocknen des Gegenstandes Inertgas eingespart werden kann oder zumindest die Kontamination des Inertgases in einem Trockenraum mit sauerstoffhaltiger Atmosphäre aus den Hohlräumen zu verringern.

Diese Aufgabe wird bei einem Traggestell der eingangs genannten Art dadurch gelöst, dass
das Transportgestell eine Dichteinrichtung umfasst, durch welche die wenigstens eine Hohlraumöffnung des Gegenstandes zumindest vorübergehend gegen umgebene Atmosphäre weitgehend gasdicht verschließbar ist.

Auf diese Weise ist ein Übertreten der Atmosphäre aus dem Hohlraum in die den Gegenstand umgebende Atmosphäre, insbesondere in die Inertgasatmosphäre, weitgehend unterbunden. Eine vollständige Gasdichtigkeit der Hohlraumöffnung ist nicht erforderlich, jedoch wünschenswert.

Wenn die Hohlraumöffnung verschlossen ist, ist zumindest der Hauptströmungsweg durch den zugehörigen Hohlraum zwischen Hohlraumöffnung und kleinen Durchgängen und Ritzen blockiert.

Wenn der Gegenstand auf dem Transportgestell sich dann in einem mit Inertgas gefüllten Trockenraum befindet, kann zwar gegebenenfalls immer noch etwas sauerstoffhaltige Atmosphäre aus den Hohlräumen durch das Inertgas verdrängt werden. Die Gesamtmenge an austretender sauerstoffhaltiger Atmosphäre ist jedoch gegenüber einem Traggestell ohne Dichteinrichtung verringert, weshalb zumindest weniger Inertgas in den Trockenraum nachgeführt werden muss, um die für den Trockenvorgang erforderliche Sauerstoffkonzentration einzustellen.

Die Dichteinrichtung ist dabei unabhängig von und zusätzlich zu der Befestigungseinrichtung für den Gegenstand zu verstehen. Dies bedeutet, dass durch die Dichteinrichtung weitere Hohlraumöffnungen verschlossen werden können, auch wenn bereits die Befestigungseinrichtung mit Hohlraumöffnungen des Gegenstandes zusammenarbeitet und diese gegebenenfalls entsprechend verschließt.

Es ist vorteilhaft, wenn die Dichteinrichtung ein oder mehrere Dichtelemente umfasst, die in ihrer Geometrie und Anordnung derart an eine jeweils zu verschließende und dem Dichtelement zugeordnete Hohlraumöffnung des Gegenstandes angepasst sind, dass die jeweilige verschlossene Hohlraumöffnung umgebende Bereiche von dem Dichtelement nicht abgedeckt werden. Hierdurch wird gewährleistet, dass die Strahlung zum Aushärten der Beschichtung diese auch möglichst umfassend erreicht und es keine oder möglichst wenige durch die Dichteinrichtung abgeschattete Bereiche gibt, die dann nachbearbeitet werden müssten.

Es ist günstig, wenn die Dichteinrichtung wenigstens eine Dichtleiste mit mehreren Dichtelementen umfasst, welche in ihrer Geometrie und Anordnung an zu verschließende Hohlraumöffnungen im Schwellerbereich einer Fahrzeugkarosserie angepasst sind. Die im Schwellerbereich einer Fahrzeugkarosserie vorhandenen Hohlräume machen den größten Teil der insgesamt bei einer Fahrzeugkarosserie, ohne die zugehörigen Karosserieteile, vorhandenen Hohlräume aus und nehmen damit auch die größte Menge an gegebenenfalls freiwerdender sauerstoffhaltiger Atmosphäre auf.

Die Fahrzeugkarosserie kann leichter auf das Traggestell aufgebracht werden, wenn die Dichtleiste zwischen einer Freigabestellung und einer Dichtstellung bewegbar ist.

Es ist insbesondere gut, wenn mit der Dichteinrichtung Hohlraumöffnungen des Gegenstandes verschließbar sind, aus welchen in einer Trocknungslage des Gegenstandes in dem Hohlraum vorhandene Atmosphäre mit einer vertikalen Richtungskomponente aus dem Hohlraum entweichen könnte oder durch welche in einer Trocknungslage des Gegenstandes eine den Hohlraum umgebende Atmosphäre mit einer vertikalen Richtungskomponente in dem Hohlraum einströmen könnte. In diesem Fall sind die Strömungsmöglichkeiten verringert, die bei einem Inertgas, das schwerer als Luft ist, hauptsächlich zu Buche schlagen.

Es ist von Vorteil, wenn eine Spüleinrichtung vorhanden ist, durch welche ein Spülgas über wenigstens ein Dichtelement und/oder ein Element der Befestigungseinrichtung abgebbar ist. In diesem Fall kann die sauerstoffhaltige Atmosphäre gezielt aus den Hohlräumen durch das Spülgas verdrängt werden, bevor der Gegenstand in das Inertgas hinein bewegt wird. In der Praxis wird dabei das verwendete Inertgas auch als Spülgas eingesetzt.

Um die sauerstoffhaltige Atmosphäre aus den Hohlräumen zu entfernen, kann alternativ eine Absaugeinrichtung vorhanden sein, durch welche in einem Hohlraum befindliche Atmosphäre über wenigstens ein Dichtelement und/oder ein Element der Befestigungseinrichtung aus dem Hohlraum absaugbar ist.

Hierbei ist es günstig, wenn die Spüleinrichtung oder die Absaugeinrichtung ein in oder an dem Traggestell verlaufendes Kanalsystem umfasst, welches einen Anschluss mit einer Öffnung in dem wenigstens einem Dichtelement und/oder dem Element der Befestigungseinrichtung verbindet. Hierdurch sind neben den Dichtelementen keine gesonderten Abgabeelemente für das Spülgas oder Absaugelemente notwendig und das Traggestell kann am Behandlungsort mit einer Spülgasquelle oder einer Absaugpumpe verbunden werden.

Im Hinblick auf das eingangs genannte Verfahren wird die oben genannte Aufgabe dadurch gelöst, dass
c) die wenigstens eine Hohlraumöffnung des Gegenstandes mit einer Dichteinrichtung des Transportgestells weitgehend gasdicht gegen umgebene Atmosphäre verschlossen wird, bevor der Gegenstand in den Trockenraum hinein gefördert wird.

Es ist für die weitere Behandlung des Gegenstandes günstig, wenn die wenigstens eine Hohlraumöffnung des Gegenstandes wieder freigegeben wird, nachdem der Gegenstand wieder aus dem Trockenraum heraus gefördert worden ist.

Wie oben erläutert, ist es vorteilhaft, wenn
a) der Hohlraumöffnung des Gegenstandes zumindest vor dessen Bewegung in den Trockenraum hinein ein Spülgas zugeführt wird;
   oder
b) in dem Hohlraum befindliche Atmosphäre über die Hohlraumöffnung des Gegenstandes (12; 1076) abgesaugt wird.

Bei dem Verfahren wird vorzugsweise ein Transportgestell mit oben erläuterten Merkmalen gemäß den Ansprüchen 1 bis 7 verwendet.

Was die eingangs genannte Verwendung eines Transportgestells betrifft, ist die oben genannte Aufgabe dadurch gelöst, dass ein Transportgestell mit oben erläuterten Merkmalen gemäß den Ansprüchen 1 bis 7 verwendet wird.

Die Vorteile des Verfahrens und der Verwendung entsprechen sinngemäß den oben zum Traggestell erläuterten Vorteilen.

Ausführungsbeispiele der Erfindung werden nachfolgend anhand der Zeichnungen näher erläutert. In diesen zeigen:
- Figur 1: eine Seitenansicht eines Skids gemäß einem ersten Ausführungsbeispiel mit einer Dichteinrichtung für Fahrzeugkarosserien, auf welchem eine Fahrzeugkarosserie befestigt ist;
- Figur 2: eine Aufsicht von oben auf den Skid von Figur 1 ohne darauf befestigte Fahrzeugkarosserie, wobei zwei verschwenkbare Dichtleisten in einer Dichtstellung gezeigt sind;
- Figur 3: eine der Figur 2 entsprechende Aufsicht auf den Skid, wobei die Dichtleisten in einer Freigabestellung gezeigt sind;
- Figur 4: eine Seitenansicht eines Skids gemäß einem zweiten Ausführungsbeispiel mit einer Dichteinrichtung für Karosserieteile, auf welchem Stoßfänger, Türen und Hauben befestigt sind;
- Figur 5: einen Schnitt des Skids nach Figur 4 entlang der dortigen Schnittlinie V-V;
- Figur 6: eine Aufsicht von oben auf den Skid für Karosserieteile;
- Figur 7: einen Längsschnitt des Skids für Karosserieteile ohne darauf befestigte Karosserieteile;
- Figur 8: eine Belichtungskammer, in welcher sich die auf dem Skid nach Figur 1 befestigte Fahrzeugkarosserie in einer Kopfüberstellung befindet;
- Figur 9: als drittes Ausführungsbeispiel ein abgewandeltes Skid für Fahrzeugkarosserien mit einer Spüleinrichtung in einer teilweise durchsichtigen Seitenansicht, so dass ein Kanalsystem zu erkennen ist;
- Figur 10: als viertes Ausführungsbeispiel ein abgewandeltes Skid für Fahrzubehörteile in einer der Figur 7 entsprechenden teilweise durchsichtigen Seitenansicht.

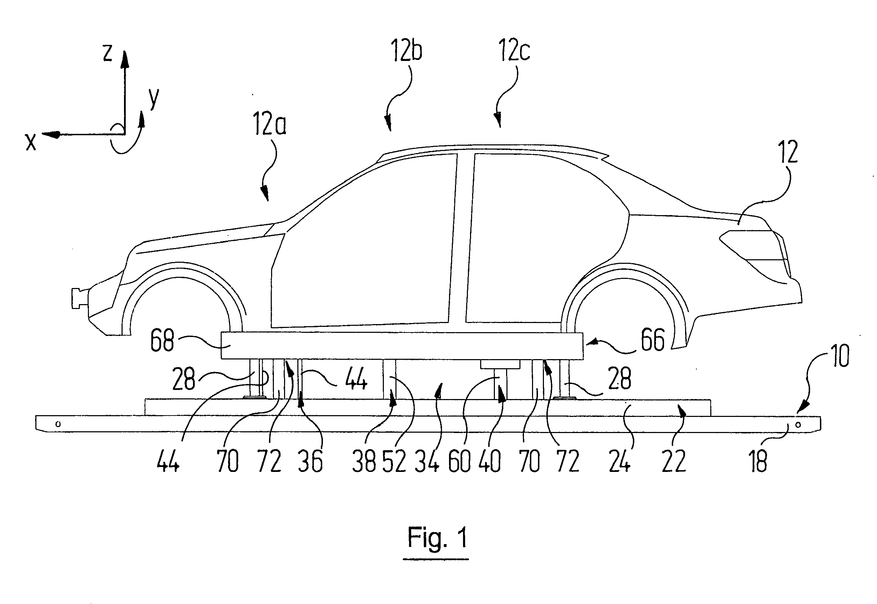

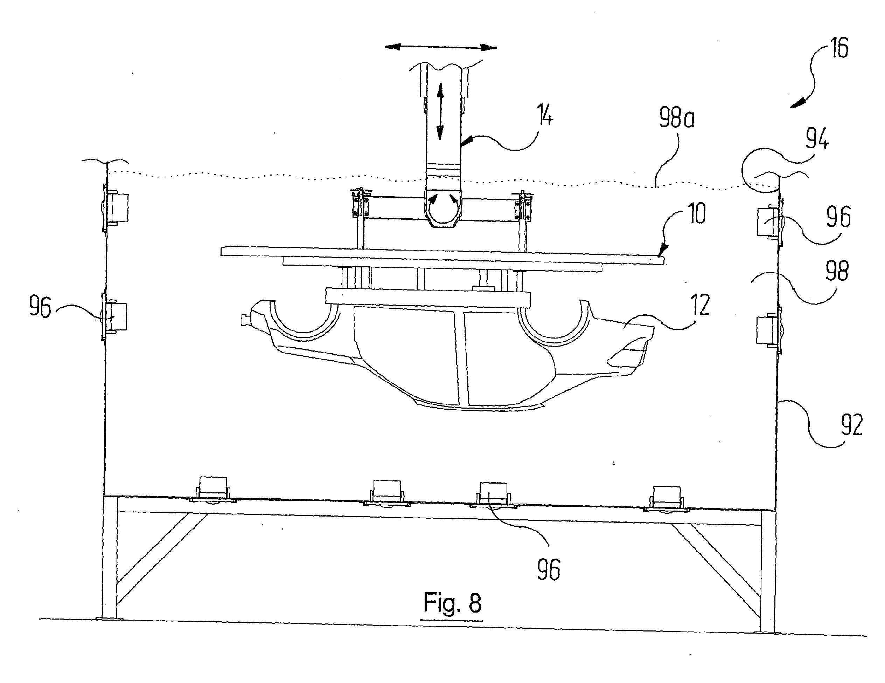

Zunächst wird auf die Figuren 1 bis 3 Bezug genommen. Dort ist ein nachfolgend als "Skid" bezeichnetes Transportgestell 10 gezeigt. Auf diesem Skid 10 werden Fahrzeugkarosserien 12 mittels eines Fördersystems 14 durch eine Trocknungsanlage 16 gefördert, von denen in Figur 8 jeweils ein Teil gezeigt ist. Hierauf wird weiter unten nochmals näher eingegangen.

Ein in den Figuren 1 bis 3 gezeigtes Bezugs-Koordinatensystem sei fest mit dem Skid 10 verankert, so dass es sich mit dem Skid 10 im Raum mitbewegt.

Der Skid 10 umfasst zwei gerade und parallel zueinander in x-Richtung verlaufende Auflagekufen 18 in Form von zwei Hohlprofil-Längsholmen mit rechteckigem Querschnitt, die eine xy-Ebene als Auflageebene des Skids 10 vorgeben. Die Auflagekufen 18 sind über zwei ebenfalls als Hohlprofil ausgebildete Querholme 20 miteinander verbunden, so dass eine verwindungssteife Kufenstruktur gebildet ist, auf welcher der Skid 10 beispielsweise auf einem Rollenfördersystem ablaufen kann, wie es an und für sich bekannt ist.

Die Auflagekufen 18 tragen einen ebenfalls aus Hohlprofilen mit rechteckigem Querschnitt gebildeten Tragrahmen 22 mit zwei parallel zu den Auflagekufen 18 verlaufenden Längsholmen 24 und zwei diese verbindenden Querholmen 26. An der in z-Richtung nach oben weisenden Seite des Tragrahmens 22 sind insgesamt vier senkrecht zur Auflageebene des Skids 10 in z-Richtung nach oben ragende Befestigungsstutzen 28 angeordnet. Als Befestigungsmittel für die Fahrzeugkarosserie 12 tragen diese an ihrem vom Tragrahmen 22 abliegenden Ende jeweils eine an und für sich bekannte Verriegelungseinrichtung 30 mit jeweils einem Klemmkonus 32, der um eine gegenüber seiner Längsachse parallel versetzte Drehachse, die in z-Richtung verläuft, zwischen einer Freigabestellung und einer Arretierstellung verdrehbar gelagert ist.

Die Verriegelungseinrichtungen 30 sind so dimensioniert und angeordnet, dass sie zu Durchgängen im Bodenblech der Fahrzeugkarosserie 12 passen, durch welche jeweils ein Klemmkonus 32 in seiner Freigabestellung hindurchgeführt werden kann. Dann werden die Klemmkonusse 32 in ihre jeweilige Arretierstellung verdreht, wodurch die Fahrzeugkarosserie 12 in an und für sich bekannter Weise an dem Skid 10 derart befestigt ist, dass auch Überkopffahrten möglich sind.

Der Tragrahmen 22 trägt außerdem eine Dichteinrichtung 34, welche Hohlraumöffnungen der Fahrzeugkarosserie 12 verschließt, wenn die Fahrzeugkarosserie 12 auf dem Skid 10 befestigt ist.

Beim in den Figuren 1 bis 3 gezeigten Ausführungsbeispiel umfasst die Dichteinrichtung 34 drei Dichteinheiten, und zwar eine vordere erste Dichteinheit 36, eine mittlere zweite Dichteinheit 38 und eine hintere dritte Dichteinheit 40, welche komplementär zu in jeweils einem vorderen Bereich 12a, einem mittleren Bereich 12b und einem hinteren Bereich 12c der Fahrzeugkarosserie 12 in deren Bodenblech vorhandenen Hohlraumöffnungen ausgebildet sind.

Von den nachfolgend erläuterten, jeweils zweifach vorhandenen Bauteilen der Dichteinheiten 36, 38 und 40 ist in den Figuren immer nur jeweils eines mit einem Bezugszeichen versehen.

Die vordere Dichteinheit 36 ist komplementär zu zwei Hohlraumöffnungen mit ovalem Querschnitt ausgebildet, die im Bodenblech der Fahrzeugkarosserie 12 in deren vorderen Bereich 12a symmetrisch zu deren in einer xz-Ebene verlaufenden Mittelebene angeordnet sind.

Hierzu umfasst die vordere Dichteinheit 36 zwei Dichtplatten 42, von denen jede über Verbindungsstreben 44 an jeweils einem Längsholm 24 des Tragrahmens 22 angebracht ist. In jede Dichtplatte 42 ist eine in z-Richtung offene elliptische Nut 46 eingearbeitet, in die ein Dichtring 48 eingelegt ist. Wenn die Fahrzeugkarosserie 12 auf dem Skid 10 befestigt ist, liegt diese über den Dichtring 48 auf der Dichtplatte 42 auf, so dass der Dichtring 48 das Bodenblech der Fahrzeugkarosserie 12 berührt und in Umfangsrichtung um die zugehörige ovale Hohlraumöffnung in dem Bodenblech der Fahrzeugkarosserie 12 herum läuft. Die Dichtplatten 42 decken die beiden ovalen Hohlraumöffnungen im vorderen Bereich 12a der Fahrzeugkarosserie 12 ab und dichten diese so in Kombination mit den Dichtringen 48 weitgehend gasdicht ab.

Die mittlere Dichteinheit 38 ist in entsprechender Art und Weise komplementär zu zwei Hohlraumöffnungen mit rechteckigem Querschnitt ausgebildet, die im Bodenblech der Fahrzeugkarosserie 12 in deren mittleren Bereich 12b symmetrisch zu deren Mittelebene angeordnet sind.

Die mittlere Dichteinheit 38 weist hierzu zwei Dichtplatten 50 auf, von denen jede über jeweils eine Verbindungsstrebe 52 an jeweils einem Längsholm 24 des Tragrahmens 22 angebracht ist. In jede Dichtplatte 50 ist eine in z-Richtung offene rechteckige Nut 54 eingearbeitet, in die ein Dichtring 56 eingelegt ist. Wenn die Fahrzeugkarosserie 12 auf dem Skid 10 befestigt ist, liegt diese über den Dichtring 56 auf der Dichtplatte 50 auf, so dass der Dichtring 56 das Bodenblech der Fahrzeugkarosserie 12 berührt und in Umfangsrichtung um die zugehörige rechteckige Hohlraumöffnung in dem Bodenblech der Fahrzeugkarosserie 12 herum läuft. Die Dichtplatten 50 decken die beiden rechteckigen Hohlraumöffnungen im mittleren Bereich 12b der Fahrzeugkarosserie 12 ab und dichten diese in Kombination mit den Dichtringen 56 weitgehend gasdicht ab.

Die hintere Dichteinheit 40 ist analog komplementär zu zwei Hohlraumöffnungen mit rechteckigem Querschnitt ausgebildet, die im Bodenblech der Fahrzeugkarosserie 12 in deren hinteren Bereich 12c symmetrisch zu deren Mittelebene angeordnet sind, jedoch eine größere Querschnittsfläche als die rechteckigen Hohlraumöffnungen im mittleren Bereich 12b der Fahrzeugkarosserie 12 haben.

Die hintere Dichteinheit 40 weist zwei Dichtplatten 58 auf, von denen jede über jeweils eine Verbindungsstrebe 60 an jeweils einem Längsholm 24 des Tragrahmens 22 angebracht ist. In jede Dichtplatte 58 ist eine in z-Richtung offene rechteckige Nut 62 eingearbeitet, in die ein Dichtring 64 eingelegt ist. Wenn die Fahrzeugkarosserie 12 auf dem Skid 10 befestigt ist, liegt diese über den Dichtring 64 auf der Dichtplatte 58 auf, so dass der Dichtring 64 das Bodenblech der Fahrzeugkarosserie 12 berührt und in Umfangsrichtung um die zugehörige rechteckige Hohlraumöffnung in dem Bodenblech der Fahrzeugkarosserie 12 herum läuft. Die Dichtplatten 58 decken die beiden rechteckigen Hohlraumöffnungen im hinteren Bereich 12c der Fahrzeugkarosserie 12 ab und dichten diese in Kombination mit den Dichtringen 64 weitgehend gasdicht ab.

Die Dichtelemente der Dichteinheiten 36, 38 und 40 können auch einen gegenüber einer xy-Ebene geneigten oder eine in z-Richtung verformte Geometrie haben, wenn die Fahrzeugkarosserie 12 entsprechende Hohlraumöffnungen mit entsprechenden Randbereichen aufweist. Jedes Dichtelement ist somit jeweils komplementär zu einem die betreffende Hohlraumöffnung umgebenden Randbereich.

Im Schwellerbereich 66 der Fahrzeugkarosserie 12 ist stets ein verhältnismäßig großer Hohlraum vorhanden, zu dem mehrere bezogen auf den Schweller von außen zugängliche Hohlraumöffnunaen führen.

Um auch diese Hohlraumöffnungen zu verschließen, umfasst die Dichteinrichtung 34 außerdem zwei Dichtleisten 68, von denen jeweils eine an der jeweiligen Außenseite eines Längsholms 24 des Tragrahmens 22 über Verbindungsstreben 70 befestigt ist und sich in x-Richtung parallel zu den Auflagekufen 18 des Skids 10 bzw. weitgehend parallel zum Schweller der auf dem Skid 10 befestigten Fahrzeugkarosserie 12 erstreckt.

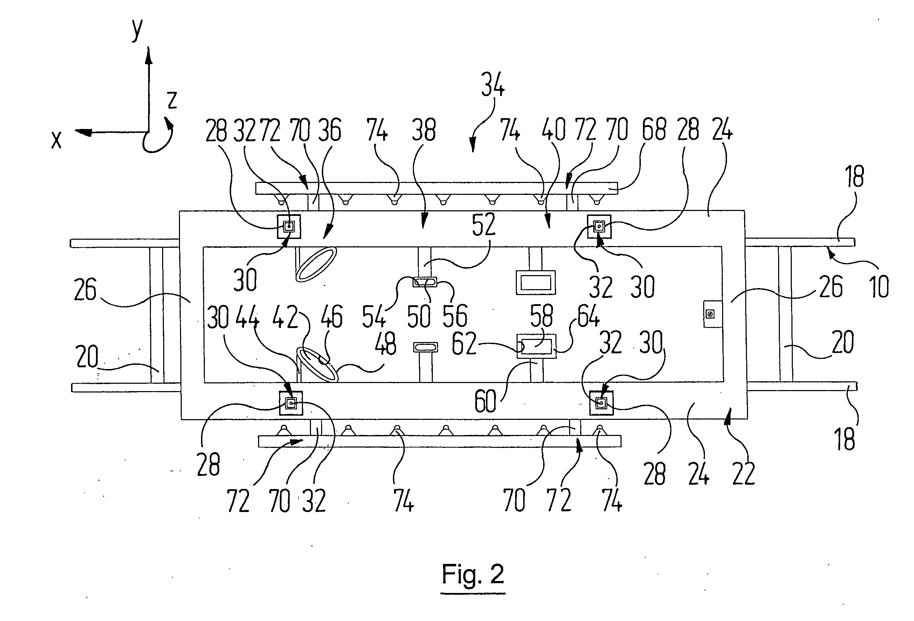

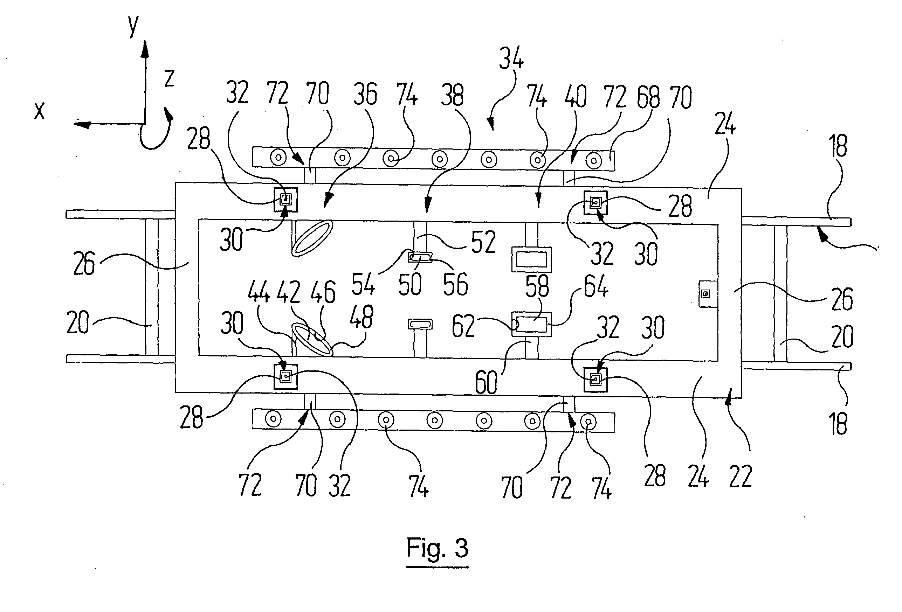

Über jeweils eine Führungsmechanik 72 können die Dichtleisten 68 zwischen einer Dichtstellung (Figur 2) und einer Freigabestellung (Figur 3) hin und her bewegt werden.

Jede Dichtleiste 68 trägt auf einer in der Dichtstellung dem Schweller der Fahrzeugkarosserie 12 zugewandten Leistenfläche 68a mehrere Dichtstopfen 74, von denen in den Figuren nicht alle mit Bezugszeichen versehen sind. Die Dichtstopfen 74 sind in ihren Abmessungen und ihrer Anordnung auf der Dichtleiste 68 an die zu verschließenden Hohlraumöffnungen im Schwellerbereich 66 der Fahrzeugkarosserie 12 angepasst, so dass sie diese Hohlraumöffnungen der Fahrzeugkarosserie 12 verschließen, wenn die Dichtleisten 68 ihre in Figur 2 gezeigte Dichtstellung einnehmen.

Wenn die Fahrzeugkarosserie 12 auf den Skid 10 aufgebracht wird, nehmen die Dichtleisten 68 zunächst ihre Freigabestellung ein. Sobald die Fahrzeugkarosserie 12 mittels der Verriegelungseinrichtungen 30 an dem Skid 10 befestigt ist, werden die Dichtleisten 68 in ihre Dichtstellung bewegt, so dass die Hohlraumöffnungen im Schwellerbereich 66 der Fahrzeugkarosserie 12 abgedichtet sind.

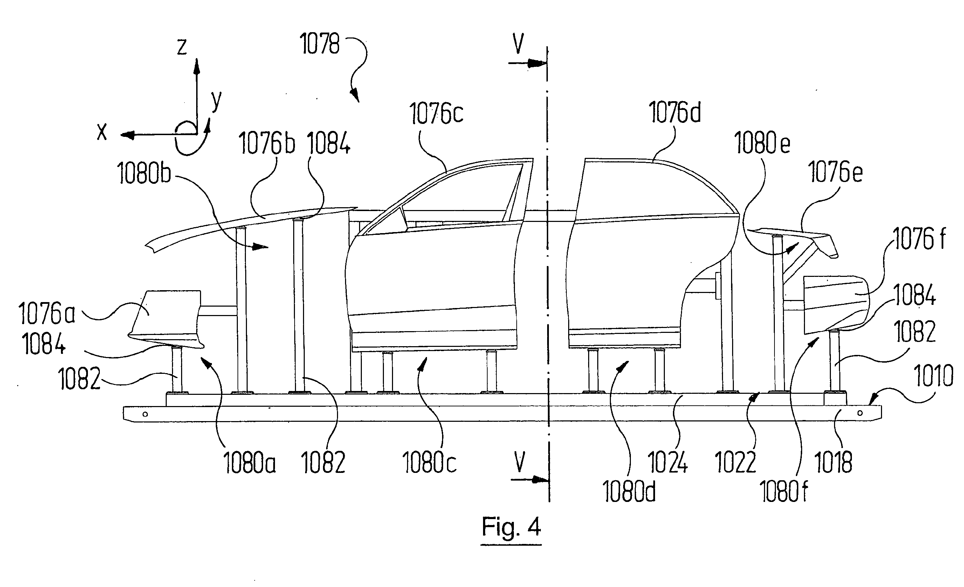

In Figur 4 ist als zweites Ausführungsbeispiel ein Skid 1010 für Karosserieteile 1076 gezeigt. Komponenten des Skids 1010, die denjenigen des Skids 10 entsprechen, sind mit denselben Bezugszeichen zuzüglich 1000 gekennzeichnet.

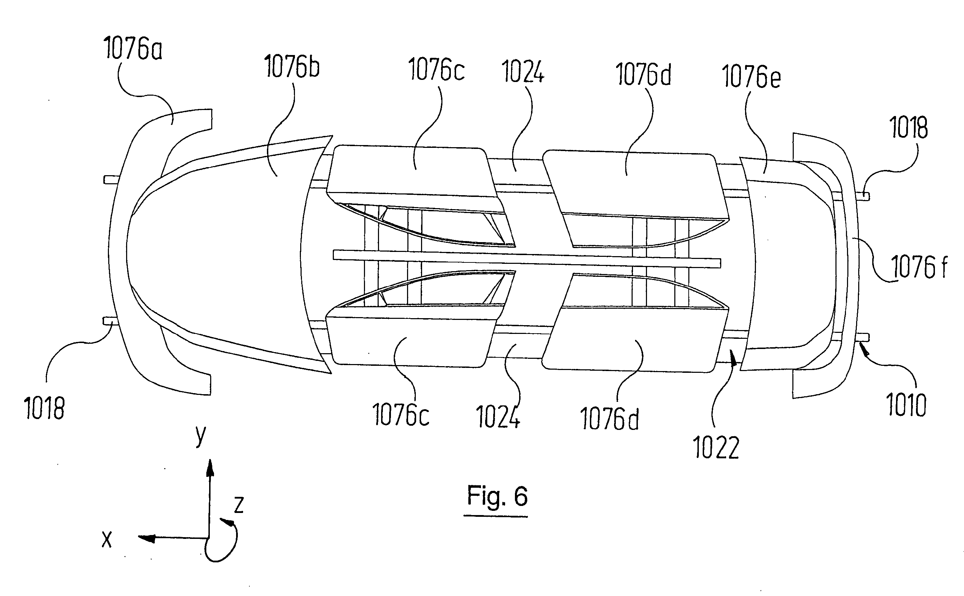

Als Karosserieteile sind in den Figuren 4 bis 6 ein vorderer Stoßfänger 1076a, eine Motorhaube 1076b, ein Paar vorderer Türen 1076c, ein Paar hinterer Türen 1076d, eine Heckklappe 1076e sowie ein hinterer Stoßfänger 1076f gezeigt.

Der Tragrahmen 1022 des Skids 1010 trägt eine Dichteinrichtung 1078, welche Hohlraumöffnungen der einzelnen Karosserieteile 1076 verschließt, wenn diese auf dem Skid 1010 befestigt sind.

Hierzu umfasst die Befestigungseinrichtung 1078 den jeweiligen Karosserieteilen 1076 zugeordnete Dichteinheiten 1080a, 1080b, 1080c, 1080d, 1080e, 1080f, welche das Bezugszeichen 1080 zuzüglich eines Buchstabenindex tragen, der dem Buchstabenindex des zugeordneten Karosserieteils 1076 entspricht. Die Dichteinheiten 1080 umfassten jeweils an Streben 1082 befestigte Dichtstopfen 1084, von denen in den Figuren nicht alle mit einem Bezugszeichen versehen sind. Die Zahl, Anordnung und Geometrie der Dichtstopfen 1084 jeder Dichteinheit 1080 ist an die Zahl, Anordnung und Geometrie der zu verschließenden Hohlraumöffnungen in den jeweiligen Karosserieteilen 1076 angepasst, die von der entsprechenden Dichteinheit 1080 abgedichtet werden. Hierzu sind die Streben 1082 entsprechend ausgebildet und angeordnet.

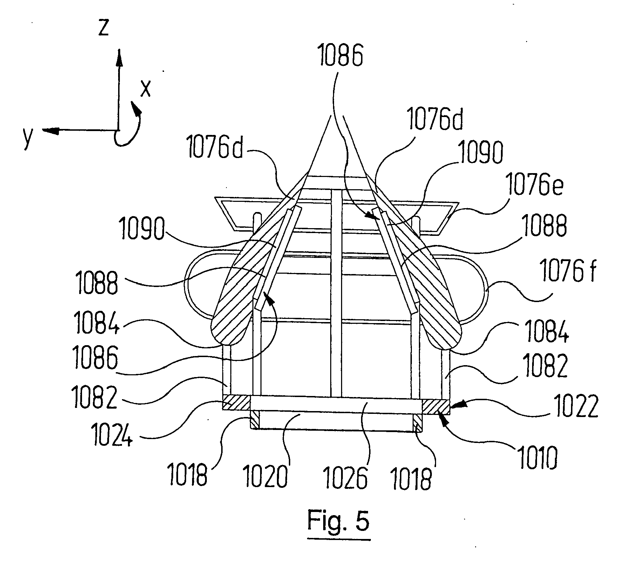

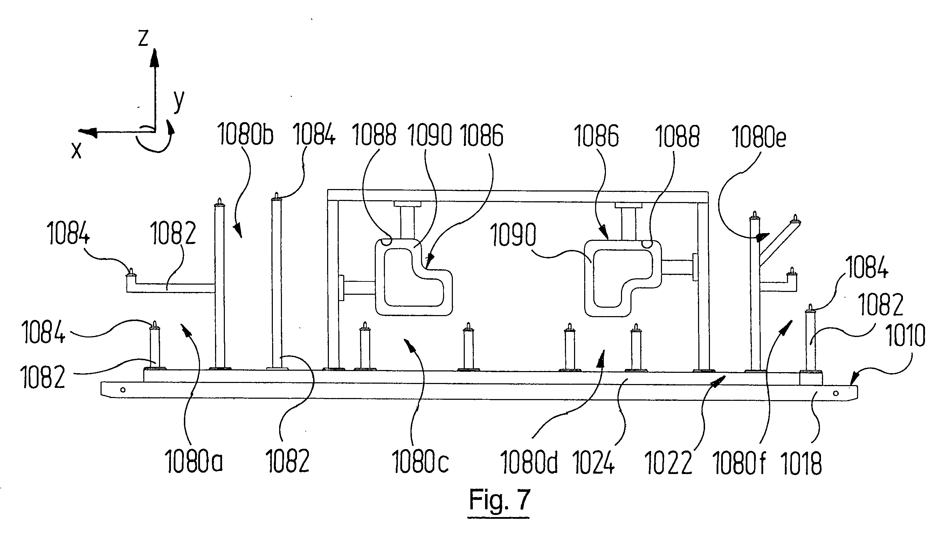

Wie in den Figuren 5 und 7 gut zu erkennen ist, umfassen die den Türen 1076c und 1076d zugeordneten Dichteinheiten 1080c und 1080d neben Dichtstopfen 1084 für kleinere Hohlraumöffnungen im Randbereich der Türen 1076c, 1076d auch Dichtplatten 1086, die den Dichtplatten 42, 50 und 58 des Skids 10 ähnlich sind und verhältnismäßig große Hohlraumöffnungen im Korpus der Türen 1076c, 1076d verschließen können.

In jede Dichtplatte 1086 ist eine Nut 1088 eingearbeitet, in die ein Dichtring 1090 eingelegt ist. Wenn die Türen 1076c, 1076d auf dem Skid 1010 befestigt sind, liegen diese über den jeweiligen Dichtring 1090 auf der zugehörigen Dichtplatte 1086 auf, so dass der Dichtring 1090 die Innenfläche der Fahrzeugtür 1076c, 1076d berührt und in Umfangsrichtung um die zugehörige Hohlraumöffnung in der Fahrzeugtür 1076c, 1076d herum läuft. Die Dichtplatten 1086 decken dann die Hohlraumöffnungen in den Fahrzeugtüren 1076c, 1076d ab und dichten diese in Kombination mit den Dichtringen 1090 weitgehend gasdicht ab.

Wie in Figur 7 zu erkennen ist, folgt der Verlauf der jeweiligen Dichtringe 1090 der Außenkontur eines "L" und sind damit komplementär zu Hohlraumöffnungen der Türen 1076c, 1076d mit einem entsprechenden Querschnitt. Wenn bei anderen zu behandelnden Türen oder Karosserieteilen Hohlraumöffnungen mit davon verschiedenen Querschnitten vorhanden sind, verlaufen auch die Dichtringe 1090 entsprechend anders.

Die Funktionsweise der Skids 10 und 1010 wird nun anhand Figur 8 näher erläutert.

Dort ist als Trockenraum der Trocknungsanlage 16 schematisch eine Belichtungskammer 92 mit zugehörigen Komponenten gezeigt. Die Belichtungskammer 92 ist nach oben hin offen, weist eine obere Zugangsöffnung 94 auf und umfasst als Trockenmittel mehrere an ihrer Innenwand verteilte UV-Strahler 96, wie sie an und für sich bekannt sind.

Die Belichtungskammer 92 ist mit einem Inertgas 98 in Form von Kohlendioxid gefüllt, welches im gasförmigen Zustand schwerer als Luft ist und sich somit in der nach oben offenen Trockenkammer 92 ähnlich einer Flüssigkeit verhält, so dass die Trockenkammer 92 bis zu einem Inertgasspiegel 98a gefüllt ist.

Das in Figur 8 nur teilweise zu erkennende Fördersystem 14 ist ein Hängebahnfördersystem und in der Lage, den Skid 10 und die darauf befestigte Fahrzeugkarosserie 12 in horizontaler und in vertikaler Richtung zu bewegen und um eine horizontale Drehachse zu rotieren, was in Figur 8 durch entsprechende Doppelpfeile angedeutet ist.

Eine Fahrzeugkarosserie 12 wurde nun in einem vorhergehenden Schritt mit einem UV-härtenden Lack versehen und auf dem Skid 10 befestigt. Beim Skid 10 sind die im Bodenblech und im Schwellerbereich 66 der Fahrzeugkarosserie 12 vorhandenen Hohlraumöffnungen und die damit verbunden Hohlräume in der Fahrzeugkarosserie 12 durch die Dichteinrichtung 34 weitgehend gasdicht abgedichtet, wie es oben erläutert wurde.

Nun wird der Skid 10 mit der Fahrzeugkarosserie 12 mittels des Hängebahnfördersystems 14 in eine Position oberhalb der Belichtungskammer 92 gefahren und in die Belichtungskammer 92 abgesenkt. Bei der Abwärtsbewegung wird der Skid 10 um seine Drehachse verdreht und gleichsam in einer Rollbewegung von oben in die Belichtungskammer 92 und das darin befindliche Inertgas 98 eingetaucht. Schließlich nimmt die Fahrzeugkarosserie 12 die in Figur 8 gezeigte Überkopfstellung ein, in welcher sie gegenüber der Ausgangslage um 180° verdreht ist.

Die von der Dichteinrichtung 34 verschlossenen Hohlraumöffnungen der Fahrzeugkarosserie 12 weisen nun nach oben. Währen diese Hohlraumöffnungen nicht verschlossen, würde sauerstoffhaltige Luft auf Grund des Dichteunterschiedes gegenüber dem Kohlendioxid 98 aus den zugehörigen Hohlräumen in der Fahrzeugkarosserie 12 nach oben ausströmen. Hierdurch würde die Sauerstoffkonzentration in der Inertgasatmosphäre der Belichtungskammer 92 deutlich größer als die Konzentration von etwa 1% Restsauerstoff werden, die für eine einwandfreie Aushärtung des UV-Lacks erforderlich ist. In diesem Fall müsste zunächst weiter Kohlendioxid in die Belichtungskammer 92 geleitet werden, welches die unerwünschte verunreinigte Atmosphäre nach oben aus der Belichtungskammer 92 verdrängen würde.

Dadurch, dass die Hohlräume in der Fahrzeugkarosserie 12 durch die Dichteinrichtung 34 abgedichtet sind, ist jedoch verhindert, dass die in den Hohlräumen befindliche Luft aus diesen austritt und die Inertgasatmosphäre in der Belichtungskammer 92 kontaminiert wird.

Wenn die Dichteinrichtung 34 so eingerichtet ist, dass nicht alle Hohlräume, sondern lediglich einige Hohlräume der Fahrzeugkarosserie 12 abgedichtet sind, wird der Sauerstoffeintrag in die Inertgasatmosphäre durch aus der Fahrzeugkarosserie 12 austretende Luft zumindest verringert. In diesem Fall muss zwar noch zusätzlich Kohlendioxid in die Belichtungskammer 92 geleitet werden, um die gewünschte Sauerstoffkonzentration einzustellen. Die benötigte Menge an zusätzlichem Kohlendioxid ist hierbei jedoch kleiner als in dem Fall, in dem die Fahrzeugkarosserie 12 ohne zumindest teilweise abgedichtete Hohlräume in die Belichtungskammer 92 eingebracht wird.

In der Praxis ist es sinnvoll, wenn wenigstens die größten und damit die größte Menge Luft aufnehmenden Hohlräume der zu trocknenden Fahrzeugkarosserie 12 mittels der Dichteinrichtung 34 des Skids 10 abgedichtet werden.

Wenn die Restsauerstoffmenge in der Inertgasatmosphäre in der Belichtungskammer 92 um 1% bis 5% liegt, werden die UV-Strahler 96 aktiviert, so dass die gesamte mit Inertgas gefüllte Belichtungskammer 92 von UV-Strahlung durchflutet ist.

Nachdem der Belichtungsvorgang abgeschlossen ist, wird die Fahrzeugkarosserie 12 wieder aus der Belichtungskammer 92 herausbewegt, wozu beispielsweise die Eintauchbewegung in umgekehrter Richtung durchgeführt wird.

Der oben erläuterte Vorgang wird für die Karosserieteile 1076 auf dem Skid 1010 sinngemäß entsprechend durchgeführt. Anders als bei der Fahrzeugkarosserie 12 wird der Skid 1010 jedoch beim Absenken in die Belichtungskammer 92 nicht verdreht, so dass die Karosserieteile 1076 oben auf dem Skid 1010 angebracht in die Belichtungskammer 92 gelangen. Hierdurch kann auf Verriegelungseinrichtungen beim Skid 1010 verzichtet werden, welche verhindern würden, dass die Karosserieteile 1076 bei einer Überkopflage des Skids 1010 herunterfallen würden. Gegebenenfalls reicht bereits die Dichteinrichtung 1078 des Skids 1010 für die sichere Halterung der Karosserieteile 1076 aus, so dass auch keine ergänzende Befestigungseinrichtung notwendig ist.

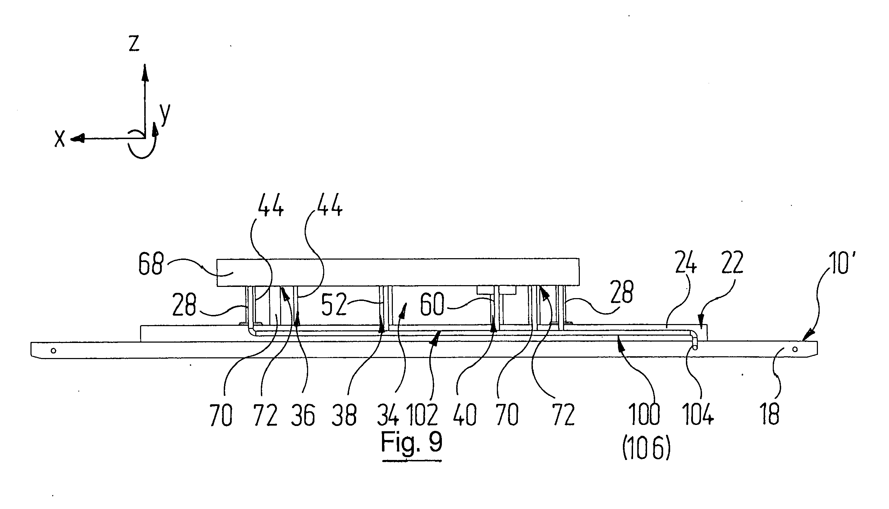

In Figur 9 ist als drittes Ausführungsbeispiel ein abgewandelter Skid 10' gezeigt. Dieser umfasst dieselben Komponenten wie der Skid 10 nach den Figuren 1 bis 3, welche auch dieselben Bezugszeichen tragen.

Die Abwandlung besteht darin, dass eine Spüleinrichtung 100 vorhanden ist, mittels welcher die Hohlraumöffnungen und über diese die zu verschließenden Hohlräume der Fahrzeugkarosserie 12 mit einem Spülfluid, in der Praxis mit einem dem Inertgas 98 der Belichtungskammer 92 entsprechenden Spülgas, beaufschlagt werden können.

Hierzu umfasst die Spüleinrichtung 100 ein in den Skid 10' integriertes Kanalsystem 102, dessen einzelne Kanäle der Übersichtlichkeit halber nicht jeweils eigens mit einem Bezugszeichen versehen sind. Das Kanalsystem 102 verbindet einen Anschluss 104 mit zentrischen Abgabeöffnungen in den Dichtplatten 50 und 58 der Dichteinheiten 36, 38 und 40 sowie mit Abgabeöffnungen, die an den jeweiligen Spitzen der Klemmkonen 32 der Verriegelungseinrichtungen 30 vorgesehen sind. Ferner verbindet das Kanalsystem 102 den Anschluss 104 mit Abgabeöffnungen, die zentrisch an den jeweiligen Dichtstopfen 74 vorgesehen sind. Hierzu sind auch die jeweiligen Befestigungsstutzen 28, die Verbindungsstreben 52, 60 und 70, die Dichtleisten 68 sowie die jeweils eine Abgabeöffnung aufweisenden Bauteile von Kanälen durchzogen.

Beim in Figur 9 gezeigten Ausführungsbeispiel kommuniziert die vordere Dichteinheit 36 nicht mit dem Anschluss 104 und weist keine Abgabeöffnung auf. Dies soll veranschaulichen, dass gegebenenfalls nicht allen Hohlraumöffnungen einer Fahrzeugkarosserie 12 ein Spülgas zugeführt werden muss. Es kann ausreichend sein, wenn bestimmte, in der Regel die größten Hohlräume der Fahrzeugkarosserie 12 mit Spülgas gespült werden, um den größten Teil der in der Fahrzeugkarosserie 12 vorhandenen sauerstoffhaltigen Atmosphäre zu verdrängen.

Wenn der Skid 10' mit der Spüleinrichtung 100 verwendet wird, wird der Anschluss 104 mit einer Spülgasquelle, beim vorliegenden Ausführungsbeispiel mit einer Kohlendioxidquelle, verbunden, nachdem die Fahrzeugkarosserie 12 auf dem Skid 10 befestigt wurde und bevor der Skid 10' mit der Fahrzeugkarosserie 12 in die Belichtungskammer 92 der Trocknungsanlage 16 bewegt wird.

Durch das in die entsprechenden Hohlräume in der Fahrzeugkarosserie 12 einströmende Spülgas wird die darin befindliche Luft verdrängt. Dies ist trotz der Abdichtung der zugehörigen Hohlraumöffnungen durch die Dichteinrichtung 34 möglich, da die Hohlräume in der Fahrzeugkarosserie 12 selbst nicht vollständig geschlossen und gasdicht sind, so dass die Luft über vorhandene kleine Undichtigkeiten aus den Hohlräumen ausströmen kann.

Dann wird der Anschluss 104 von der Spülgasquelle getrennt und die Fahrzeugkarosserie 12 wie oben beschrieben in die Belichtungskammer 92 der Trocknungsanlage 16 hinein bewegt, wo die Beschichtung der Fahrzeugkarosserie 12 durch UV-Strahlung ausgehärtet wird.

In einer Abwandlung kann die Verbindung zwischen der Spülgasquelle und dem Anschluss 104 auch ständig beweglich mit dem Transportgestell 10' verbunden und beim Eintauchen der Fahrzeugkarosserie 12 in die Belichtungskammer 92 aufrechterhalten bleiben.

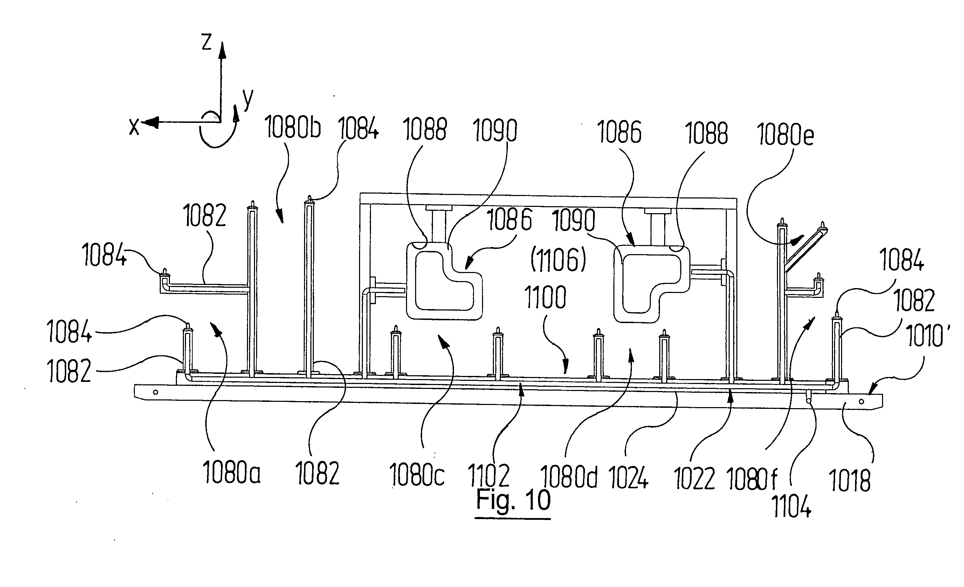

In Figur 10 ist als viertes Ausführungsbeispiel ein abgewandelter Skid 1010' gezeigt. Dieser umfasst dieselben Komponenten wie der Skid 1010 nach den Figuren 4 bis 7, welche auch dieselben Bezugszeichen tragen. Dem Skid 10 oder 10' entsprechende Komponenten sind mit denselben Bezugszeichen zuzüglich 1000 versehen.

Wie beim Skid 10' besteht die Abwandlung darin, dass eine Spüleinrichtung 1100 vorhanden ist, mittels welcher die Hohlraumöffnungen und über diese die zu verschließenden Hohlräume der Karosserieteile 1076 mit einem Spülfluid beaufschlagt werden können, wozu vorzugsweise ein dem Inertgas der Belichtungskammer 92 entsprechendes Spülgas wie Kohlendioxid verwendet wird.

Die Spüleinrichtung 1100 umfasst ein in den Skid 1010' integriertes Kanalsystem 1102, dessen einzelne Kanäle ebenfalls nicht jeweils eigens mit einem Bezugszeichen versehen sind. Das Kanalsystem 1102 verbindet einen Anschluss 1104 mit Abgabeöffnungen, die zentrisch an den jeweiligen Dichtstopfen 1084 vorgesehen sind. Hierzu sind auch die jeweiligen Streben 1082 der Dichteinheiten 1080a, 1080b, 1080c, 1080d, 1080e, 1080f sowie die jeweiligen Dichtstopfen 1084 von Kanälen durchzogen.

Die Funktionsweise des so abgewandelten Skids 1010 für die Karosserieteile 1076 entspricht der oben erläuterten Funktionsweise des abgewandelten Skids 10' für die Fahrzeugkarosserie 12, wobei entsprechend Hohlräume in den Karosserieteilen 1076 mit Kohlendioxid als Spülgas gespült werden.

Bei einer Funktionsabwandlung der Skids 10' und 1010' kann statt des Spülens mit Inertgas auch Normalatmosphäre aus den Hohlräumen der Fahrzeugkarosserie 12 oder der Karosserieteile 1076 abgesaugt werden, bevor und wenn diese in die Belichtungskammer 92 eingetaucht werden und/oder diese sich in der Belichtungskammer 92 befinden.

In diesem Fall gehören die Komponenten der Spülgaseinrichtung 100 bzw. 1100, nämlich das Kanalsystem 102 bzw. 1102 und der Anschluss 104 bzw. 1104, zu einer Absaugeinrichtung 106 bzw. 1106, die in den Figuren 9 und 10 mit jeweils in eine Klammer gesetzten Bezugszeichen gekennzeichnet ist. Die Öffnungen in den Dichtplatten 50 und 58 der Dichteinheiten 36, 38 und 40 sowie die Öffnungen, die an den jeweiligen Spitzen der Klemmkonen 32 der Verriegelungseinrichtungen 30 vorhanden sind, sind dann funktionsgemäß keine Abgabeöffnungen mehr, sondern Absaugöffnungen.

Wenn der Skid 10' mit der Absaugeinrichtung 106 verwendet wird, wird der Anschluss 104 mit einer Absaugpumpe verbunden, nachdem die Fahrzeugkarosserie 12 auf dem Skid 10 befestigt wurde und bevor der Skid 10' mit der Fahrzeugkarosserie 12 in die Belichtungskammer 92 der Trocknungsanlage 16 bewegt wird.

Wenn die Absaugpumpe aktiviert wird, wird die Atmosphäre in dem betreffenden Hohlraum der Fahrzeugkarosserie 12 über die zugehörige Hohlraumöffnung abgesaugt, wobei Umgebungsatmosphäre über die bereits erwähnten kleinen Undichtigkeiten in Form von Durchgängen und Ritzen in den Hohlraum eingesaugt wird und in diesen hinein strömt.

Wenn die Fahrzeugkarosserie 12 wie oben beschrieben in die Belichtungskammer 92 der Trocknungsanlage 16 hinein bewegt worden ist, bildet die dann die Fahrzeugkarosserie 12 umgebende Inertgasatmosphäre die Umgebungsatmosphäre, welche über die Durchgänge und Ritzen in die Hohlräume einströmt. Somit werden die Hohlräume in der Fahrzeugkarosserie 12 über die angesprochenen Durchgänge und Ritzen mit Inertgas geflutet. Der Belichtungskammer 92 wird dabei weiter Inertgas von außen zugeführt, so dass es insgesamt zu einer Auffrischung der Inertgasatmosphäre in der Belichtungskammer 92 kommt.

Die Absaugpumpe bleibt aktiv, bis die Fahrzeugkarosserie 12 nach Abschluss der Belichtung wieder aus der Belichtungskammer 92 heraus bewegt worden ist.

Auch hier kann die Verbindung zwischen der Absaugpumpe und dem Anschluss 104 nach Abschluss der Belichtung entweder getrennt werden oder ständig beweglich mit dem Transportgestell 10' verbunden und beim Eintauchen der Fahrzeugkarosserie 12 in die Belichtungskammer 92 aufrechterhalten bleiben.

Bei dem Skid 1010' mit der Absaugeinrichtung 1106 wird wie bei dem Skid 10' mit der Absaugeinrichtung 106 vorgegangen. Es gilt daher das oben zu Fahrzeugkarosserie 12 Gesagte im Hinblick auf die Karosserieteile 1076 und deren Hohlräume sinngemäß entsprechend.

## Patentansprüche

1. Transportgestell zum Fördern von Gegenständen durch eine Trocknungsanlage, an welchem wenigstens ein Gegenstand (12; 1076), insbesondere eine Fahrzeugkarosserie oder ein Karosserieteil, welcher wenigstens eine von außen zugängliche Hohlraumöffnung aufweist, die zu wenigstens einem Hohlraum des Gegenstandes (12; 1076) führt, befestigbar ist, wobei das Transportgestell (10; 10'; 1010; 1010') eine Befestigungseinrichtung (30) umfasst, durch welche der Gegenstand (12; 1076) an dem Transportgestell (10; 10'; 1010; 1010') befestigbar ist,
**dadurch gekennzeichnet, dass**
das Transportgestell (10; 10'; 1010; 1010') eine Dichteinrichtung (34; 1078) umfasst, durch welche die wenigstens eine Hohlraumöffnung des Gegenstandes (12; 1076) zumindest vorübergehend gegen umgebene Atmosphäre weitgehend gasdicht verschließbar ist.

2. Transportgestell nach Anspruch 1, **dadurch gekennzeichnet, dass** die Dichteinrichtung (34; 1078) ein oder mehrere Dichtelemente (42, 48, 50, 56, 58, 64, 74; 1084, 1086, 1090) umfasst, die in ihrer Geometrie und Anordnung derart an eine jeweils zu verschließende und dem Dichtelement (42, 48, 50, 56, 58, 64, 74; 1084, 1086, 1090) zugeordnete Hohlraumöffnung des Gegenstandes (12; 1076) angepasst sind, dass die jeweilige verschlossene Hohlraumöffnung umgebende Bereiche von dem Dichtelement (42, 48, 50, 56, 58, 64, 74; 1084, 1086, 1090) nicht abgedeckt werden.

3. Transportgestell nach Anspruch 1 oder 2, **dadurch gekennzeichnet, dass** die Dichteinrichtung (34) wenigstens eine Dichtleiste (68) mit mehreren Dichtelementen (74) umfasst, welche in ihrer Geometrie und Anordnung an zu verschließende Hohlraumöffnungen im Schwellerbereich (66) einer Fahrzeugkarosserie (12) angepasst sind.

4. Transportgestell nach Anspruch 3, **dadurch gekennzeichnet, dass** die Dichtleiste (68) zwischen einer Freigabestellung und einer Dichtstellung bewegbar ist.

5. Transportgestell nach einem der Ansprüche 1 bis 4, **dadurch gekennzeichnet, dass** mit der Dichteinrichtung (34) Hohlraumöffnungen des Gegenstands (12; 1076) verschließbar sind, aus welchen in einer Trocknungslage (16) des Gegenstands (12, 1076) in dem Hohlraum vorhandene Atmosphäre mit einer vertikalen Richtungskomponente aus dem Hohlraum entweichen könnte.

6. Transportgestell nach einem der Ansprüche 2 bis 5, **dadurch gekennzeichnet, dass**
a) eine Spüleinrichtung (100; 1100) vorhanden ist, durch welche eine Spülgas über wenigstens ein Dichtelement (42, 48, 50, 56, 58, 64, 74; 1084, 1086, 1090) und/oder ein Element (32) der Befestigungseinrichtung (30) abgebbar ist;
oder
b) eine Absaugeinrichtung (106; 1106) vorhanden ist, durch welche in einem Hohlraum befindliche Atmosphäre über wenigstens ein Dichtelement (42, 48, 50, 56, 58, 64, 74; 1084, 1086, 1090) und/oder ein Element (32) der Befestigungseinrichtung (30) aus dem Hohlraum absaugbar ist.

7. Transportgestell nach Anspruch 6, **dadurch gekennzeichnet, dass** die Spüleinrichtung (100; 1100) oder die Absaugeinrichtung (106; 1106) ein in dem Traggestell (10; 10'; 1010; 1010') verlaufendes Kanalsystem (102; 1102) umfasst, welches einen Anschluss (104; 1104) mit einer Öffnung in dem wenigstens einem Dichtelement (42, 48, 50, 56, 58, 64, 74; 1084, 1086, 1090) und/oder dem Element (32) der Befestigungseinrichtung (30) verbindet.

8. Verfahren zum Trocknen einer Beschichtung auf einem Gegenstand, insbesondere auf einer Fahrzeugkarosserie oder auf einem Karosserieteil, welcher wenigstens eine von außen zugängliche Hohlraumöffnung aufweist, die zu einem Hohlraum führt, bei welchem
a) der Gegenstand (12; 1076) auf einem Transportgestell (10; 10'; 1010; 1010') in einen mit einem Inertgas (98) gefüllten Trockenraum (92) hinein und wieder heraus gefördert wird;
b) die Beschichtung im Trockenraum (92) durch Trockenmittel (96) getrocknet wird,
**dadurch gekennzeichnet, dass**
c) die wenigstens eine Hohlraumöffnung des Gegenstandes (12; 1076) mit einer Dichteinrichtung (34; 1078) des Transportgestells (10; 10'; 1010; 1010') weitgehend gasdicht gegen umgebene Atmosphäre verschlossen wird, bevor der Gegenstand (12; 1076) in den Trockenraum (92) hinein gefördert wird.

9. Verfahren nach Anspruch 8, **dadurch gekennzeichnet, dass** die wenigstens eine Hohlraumöffnung des Gegenstandes (12; 1076) wieder freigegeben wird, nachdem der Gegenstand (12; 1076) wieder aus dem Trockenraum (92) heraus gefördert worden ist.

10. Verfahren nach Anspruch 8 oder 9, **dadurch gekennzeichnet, dass**
a) der Hohlraumöffnung des Gegenstandes (12; 1076) zumindest vor dessen Bewegung in den Trockenraum (92) hinein ein Spülgas zugeführt wird;
oder
b) in dem Hohlraum befindliche Atmosphäre über die Hohlraumöffnung des Gegenstandes (12; 1076) abgesaugt wird.

11. Verfahren nach einem der Ansprüche 8 bis 10, **dadurch gekennzeichnet, dass** als Transportgestell (10; 10'; 1010; 1010') ein Transportgestell (10; 10'; 1010; 1010') nach einem der Ansprüche 1 bis 7 verwendet wird.

12. Verwendung eines Transportgestells (10; 10'; 1010; 1010') nach einem der Ansprüche 1 bis 7 zum Fördern wenigstens eines Gegenstandes (12; 1076), insbesondere einer Fahrzeugkarosserie oder eines Karosserieteils, welcher wenigstens eine von außen zugängliche Hohlraumöffnung aufweist, die zu wenigstens einem Hohlraum des Gegenstandes (12; 1076) führt, durch eine Trocknungsanlage (16) .
